Europäisches Patentamt

European Patent Office

Office européen des brevets

(19)

(11) **EP 1 464 966 A1**

## (12) EUROPEAN PATENT APPLICATION

(43) Date of publication:
06.10.2004 Bulletin 2004/41

(51) Int Cl.7: **G01P 3/36**, G01N 21/51, G01N 15/02, G01N 21/47

(21) Application number: 04251606.2

(22) Date of filing: 19.03.2004

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: 03.04.2003 GB 0307756

(71) Applicant: **C.S.E.M. CENTRE SUISSE D'ELECTRONIQUE ET DE MICROTECHNIQUE SA**
**2007 Neuchâtel (CH)**

(72) Inventors:
• **Urban, Claus**
**8600 Dubendorf (CH)**
• **Seitz, Peter**
**8902 Urdorf (CH)**

(74) Representative: **Andrews, Arthur Stanley**
**Reddie & Grose,**
**16 Theobalds Road**
**London WC1X 8PL (GB)**

(54) **Apparatus and method for determining the concentration and motility of light scattering particles**

(57) Apparatus for the reliable measurement of the concentration and the motility light scattering particles, particularly of sperm in a micro-sample of semen, consists of two coherent beams of light (2,3), illuminating the same light scattering region (1) within the sample, and two photodetection systems (4,5), both observing the same light scattering region (1). The electrical signals (11,12) of the photodetectors (4,5) are cross-correlated (14), which suppresses the influence of multiply scattered light. The cross-correlation signal is analysed for different velocity components of the scattering particles, resulting in measures for the concentrations of motile and immotile sperm, as well as in information about the velocity distribution of motile sperm.

Fig. 1

EP 1 464 966 A1

## Description

The present invention relates to apparatus for and to a method of measuring the concentration and motility of light scattering particles. It has particular but not exclusive application in the analysis of sperm in micro-samples of semen. The analysis of sperm is of central importance in reproductive human medicine and in the selective breeding of animals, for example of dairy cattle.

The most important factor in sperm analysis is sperm motility, i.e. the directed progression of individual spermatozoa in the semen suspension. Conventionally employed techniques for this purpose rely on visual inspection of film or direct evaluation of semen samples, using yield estimates of motile and immotile sperm fractions gained with stop watch techniques.

Most investigations are still visual inspections of the semen using an optical microscope. In small drops of semen the quantity and velocity of the spermatozoa are estimated by measuring their movement over a grid. This method is time consuming; standard tests take approximately one hour. Further, numerous sources of errors exist, e.g. the limited number of spermatozoa investigated, or the subjectivity of the tester when determining velocities, resulting in inaccurate results.

Medical instruments for automated semen analysis can be divided into instruments for analysis of optical images from semen samples and instruments making use of absorption and scattering properties of the spermatozoa.

Image processing requires high quality microscope images for data processing. The number and the velocity of the spermatozoa is determined from a series of images. The method is intended to achieve a reproducible data analysis based on microscope images. Sample preparation and taking the pictures still have to be done manually and are time consuming. Reproducible sample preparation is of great importance if consistent results are to be achieved.

Instruments based on the absorption or scattering of light are principally applicable to microscopy. Scattering as well as absorption properties may be used for the characterization of particles in general. The propagation of light through a particle suspension is known to be dependent on the concentration of the particles. Dynamic light scattering can be used to detect the motion of the particles. Measurements are non-destructive and fast; a typical measurement may usually be carried out in approximately one minute.

Concentration determination in semen samples from transmission measurements with visible or infrared light are described in the literature. Transmission is claimed to be proportional to the concentration of the semen due to the absorption of light in the spermatozoa. However, this relation of the transmitted light to the concentration only holds for low concentrations. Spermatozoa do not only absorb but also scatter light. For higher concentrations, which include the natural concentration of semen, multiple scattering of light occurs. Therefore the simple relation between transmitted light and the concentration of the semen is no longer true. Consequently present instruments, which describe light transmission by absorption only, cannot measure semen concentration correctly over a wide concentration range.

According to dynamic light scattering, information about sperm motility or velocity can be determined from the dynamic behaviour of the light scattered by the sperm cells. Due to the motion of the sperm cells the scattering intensity measured at a given scattering angle is a function of time. Sperm velocity or motility then is obtained from a frequency analysis of the scattering intensity. However, it has been shown that this is only true if no multiple scattering of light occurs in the sample, restricting measurements to transparent samples only. Therefore, for an analysis of semen in terms of motility, samples have to be diluted in order to obtain correct results. Moreover, in standard measurement procedures there is no indication whether turbidity or concentration of the sample is too high. Consequently, if the results are influenced by multiple scattering this is often not noticed.

In a first aspect an object of the invention is to allow more detailed diagnoses of the quality of sperm under test to be made. In a second aspect of the invention an object of the present invention is to provide an optical method for the objective , reliable and efficient analysis of sperm in micro-samples of semen to enable measurement of sperm concentration and motility. Ia a third aspect of the invention an object of the invention is to provide means for extracting information about the velocity distribution of sperm from the measured signals.

In one aspect the invention provides apparatus for measuring the concentration and motility of light scattering particles in a sample comprising means for producing two intersecting coherent light beams, means for locating a container for the sample at the point where the beams intersect, first and second photodetectors each arranged to receive radiation from a respective one of the beams after passing through the container and to produce an electrical signal representative of the radiation falling thereupon, a cross correlator receiving the signals from the photodetectors, and processing means for deriving from the cross correlation signal the different components of the velocity distribution of the scattering particles in the sample.

The apparatus is particularly useful for the measurement of sperm concentration and motility in semen samples and improves on the state of the art in several respects:

Compared with conventional methods that rely on visual inspection'of samples of semen, the present method completely obviates the need for a human observer, the method is objective, it collects information from a much larger sample volume, and the measurement time of several seconds is much shorter.
Reliable velocity measures of absorbing or scattering particles can only be obtained from prior art optical methods if the influence of the particles that interact with the incident light is restricted to a single event. For this reason, optical methods that rely on absorption operate only in a very restricted thickness or concentration range of the sample. The present invention makes this limitation much less important since the simultaneous dual measurement principle suppresses most or all undesired multiple-interaction events. In addition, optical methods that rely on absorption operate in wavelength regions of the incident light with favourable attenuation properties in the sample. As a consequence, much of the incident light energy is absorbed, heating up the sample and leading to unspecified measurement conditions for the determination of concentration and motility values.

Optical methods that rely on light scattering and autocorrelation signal analysis can only provide accurate motility measures if it is assured that the detected light originates from a single scattering event. For this reason, such methods only operate reliably in a very restricted thickness or concentration ranges. The present invention mitigates this limitation since the simultaneous dual measurement principle suppresses most if not all undesired multiple-scattering events.

According to the present invention, apparatus for the reliable measurement of the concentration and the motility of sperm in a micro-sample of semen consists of two coherent beams of light, illuminating the same light scattering region within the sample, and two photodetection systems, both observing the same light scattering region. The electrical signals of the photodetectors are cross-correlated, which suppresses the influence of multiply scattered light. The cross-correlation signal is analysed for different velocity components of the scattering particles, resulting in measures for the concentrations of motile and immotile sperm, as well as in information about the velocity distribution of motile sperm.

In a further aspect the invention provides a method of measuring the concentration and motility of light scattering particles in a sample comprising the steps of:

passing two intersecting beams of coherent light through the sample such that the intersecting portion is located at the sample,
detecting the intensity of each beam of light after it has passed through the sample and converting it to an electrical signal,
cross correlating the electrical signals, and
correcting the measured scattering intensities using the amplitude of the cross correlation function at the origin normalised by the cross correlation function at the origin for a single scattering function.

Further optional, advantageous, or alternative features of the invention are set forth in the dependent claims to which reference should now be made.

The above and other features and advantages of the invention will be apparent from the following description, by way of example, with reference to the accompanying drawings, in which:

Figure 1 is a block diagram illustrating one embodiment of a device for measuring total sperm concentration and the velocity distribution of the spermatozoa according to the invention,

Figure 2 is a perspective view illustrating the light path geometry of the 3D cross-correlation light scattering of one embodiment according to the invention,

Figure 3 illustrates a typical analog signal measured with one photodetector for motile sperm as a function of time, and

Figure 4 shows examples for cross-correlation functions for samples with different concentration and velocity.

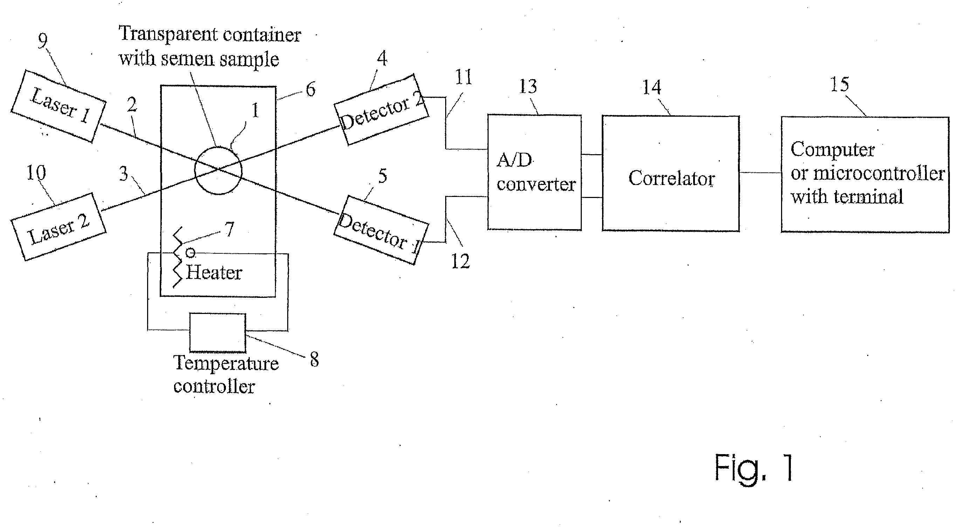

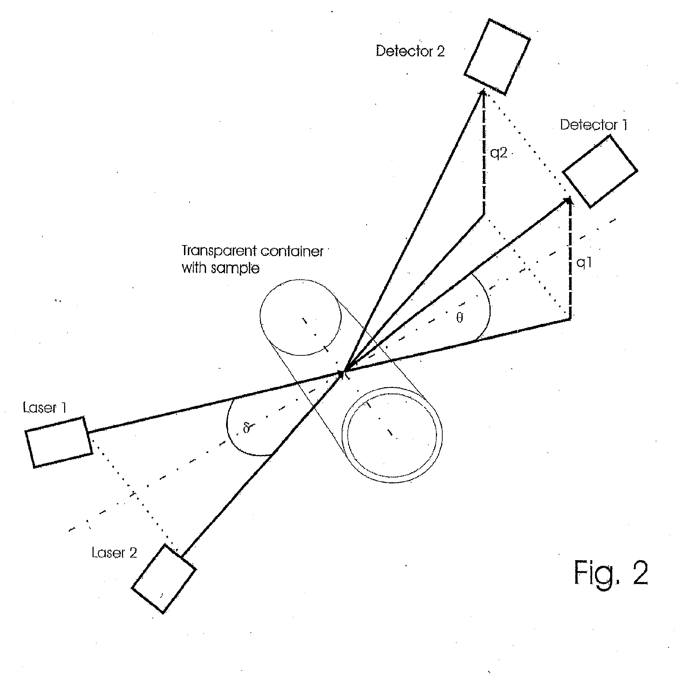

An example of apparatus in accordance with the invention is illustrated in Figure 1. The semen sample is located in a transparent container 1 and is illuminated by two laser beams 2 and 3 and the scattered light is measured with two photodetectors 4 and 5. The two impinging laser beams enclose a difference angle $\delta$ and are symmetrical to an optical axis perpendicular to the surface of the container 1, as shown in detail in Figure 2. Difference angle $\delta$ has a value in the range from 2 to 90 degrees; preferred value is 5 degrees. The effectiveness of the suppression of multiply scattered light in the measurement and the size of the overlap volume of the two laser beams depends on the difference angle $\delta$. The suppression efficiency E, i.e. the ratio of singly scattered to multiply scattered light, increases with $\delta$, $E = R*dk_i$, where R is the radius of the laser beams and $dk_i$ is the difference in the wavevectors $k_{i1}$ and $k_{i2}$ of the two laser beams. The overlap volume of the two laser beams can be approximated by

$$V = (8\ R^3 \sin(\delta/2) \cos(\delta/2)) / \cos^2 (90-\delta)$$

It decreases with increasing $\delta$. The difference angle of $\delta = 5$ degrees appears to be the optimum compromise between the desired high suppression of multiple scattering and a large overlap volume of the laser beams.

The two laser beams 2 and 3 cross each other in the container 1, preferably in its centre; the overlap volume is called scattering volume. Light, which is scattered by the spermatozoa in the scattering volume, is detected with two photodetectors 4 and 5 in such a way that the light paths from the scattering volume to the detectors are symmetrical to the incoming laser beams with respect to the scattering volume but rotated out of the plane generated by the laser beams by the angle θ. Scattering angle θ can be any value in the range of 10 degrees to 170 degrees, the preferred value being 30 degrees. This geometry guarantees identical scattering vectors $q_1$ and $q_2$ with a common scattering volume, and is called 3D cross-correlation geometry.

The transparent container 1 is preferably a tube, but it may be also a flat container or can have many different shapes. The length of the beam path through the transparent container is preferably between 200 µm and 1 mm and thus more than a magnitude larger than the volume of a spermatozoa particle. Transparent container 1 is located within a holder 6 that contains an electrical heater 7 to set and control the temperature of the semen sample to a predetermined value, preferably to the temperature of the naturally environment of the semen sample under test. The electrical heater 7 is controlled by a temperature controller 8.

The preferred light sources are two laser diodes 9 and 10 emitting light of identical wavelengths in the range of 500 nm to 1000 nm, preferably about 630 nm. Alternatively, only one laser diode with an optical beam splitting device and optical elements for realization of the laser beam geometry can be used. The two photodetectors 4 and 5 generate or modulate an electrical voltage in response to the intensity $I_M$ of the light incident on them; their output is an amplitude-modulated electrical signal 11 and 12. The two signals 11 and 12 are digitized by an A/D converter 13. From the digital signals $I_1$ and $I_2$ representing the measured scattering intensities detected by the photodetectors the cross-correlation function $g(\tau) = <I_1(\tau)\, I_2\, (t+\tau) > / <|I_1(t)|^2>$ is calculated by a correlator 14. Further analysis may carried out using a computer and results shown on the computer screen. Alternatively, cross-correlation of the signals can be performed directly using the computer or microcontroller 15 and the results displayed on a screen provided on the instrument.

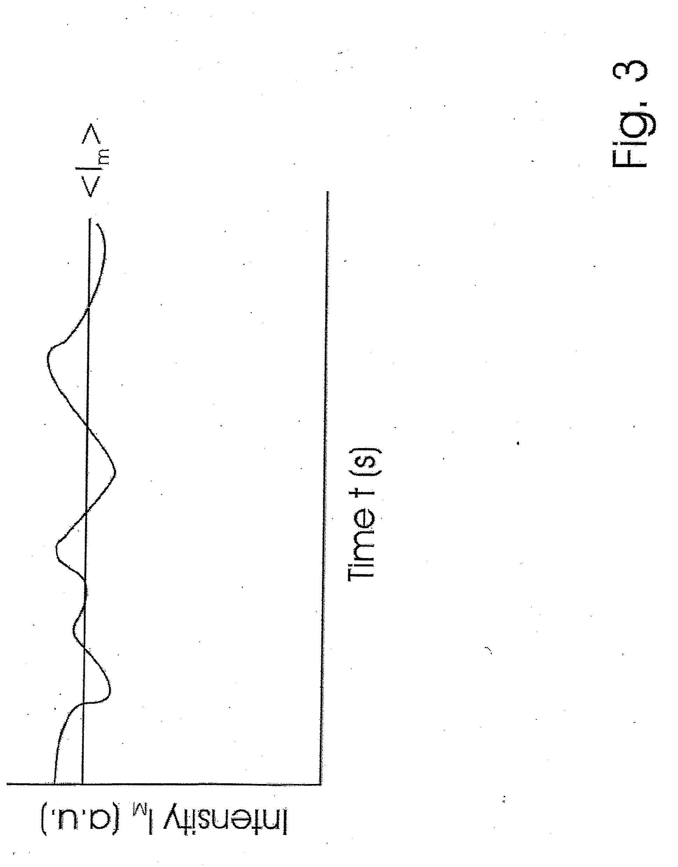

An example of the output signal 11 or 12 of one photodetector 4 or 5 is shown in Figure 3. The output signal is proportional to the measured scattering intensity $I_M(t)$. It shows fluctuations in its amplitude with time, which are caused by the movement of the spermatozoa. The average value $<I_M>$ is proportional to the concentration of the sperm sample in the limit condition of negligible multiple scattering of light, i.e. for low concentrations. In order to measure the concentration correctly for samples with a higher concentration and therefore showing multiple scattering of light, $<I_M>$ will have to be corrected for multiple scattering with the cross-correlation function g.

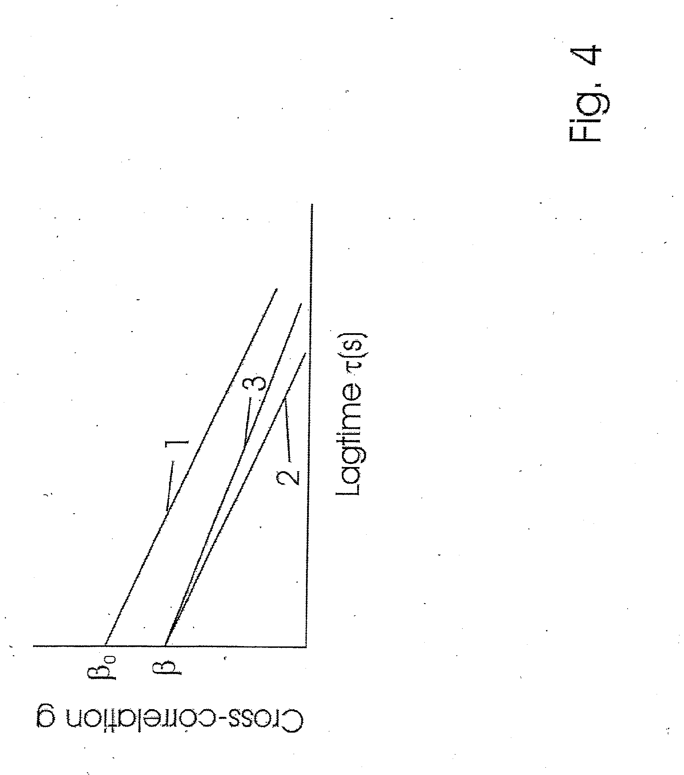

Examples of cross-correlation functions $g(\tau)$ for three different samples are shown in Figure 4, in which the logarithm of g is plotted versus the lag time τ.

The curve indicated by 41 represents the cross-correlation function for a transparent sample showing negligible multiple scattering of light. The cross-correlation function decays exponentially from the intercept g(0) = $\beta_0$, the decay constant is a measure for the velocity of the scattering particles. Curve 42 is the cross-correlation function for a sample with the same velocity distribution as 41 but showing multiple scattering of light resulting in a decreased intercept β but a decay constant identical to that of 41. Curve 43 is the cross-correlation function for a sample with the same concentration as 42, which results in an intercept β identical to that found in 42, but the slower velocity of the particles compared to 42 and 41 results in a different decay constant of this cross-correlation function, visible by a different slope in the logarithmic plot.

The decrease in amplitude at the origin, the intercept β, of the cross-correlation function from its maximum value β 0, which is representing a transparent sample with negligible multiple scattering, is a measure of the fraction of the intensity $I_S$ originating from single scattering to the total measured scattering intensity $I_M$, $I_S$ = sqrt $(\beta/\beta_0)\, I_M$. Total semen concentration c is found to be proportional to $I_S$ and thus can be calculated as

$$c = \alpha\ \text{sqrt}((\beta/\beta_0)\, I_M$$

where α is a proportionality constant that can be determined empirically. This, in contrast to previous light scattering or light absorption techniques, is true for all concentrations of the sample under investigation.

The method of cross-correlation requires some of the scattered light, typically > 1%, comes from single scattering, which sets a limit to the use of the technique for very highly concentrated samples. However, the concentration range of the invented optical sensor covers natural semen samples. Moreover, this embodiment of the invention provides a criterion to validate measured data.

Should be the concentration of the sample be too high, the measurement would simply yield β = 0 and $I_S$ = 0, therefore indicating that the limit of the technique is reached, while other light scattering or absorption techniques used in semen analysis do not have such a criterion to validate measured data.

The analysis of the decay of the cross-correlation function $g(\tau)$ provides the velocity distribution of the spermatozoa in the sample under investigation. The cross-correlation function can be described as a sum of exponentials $g(\tau) = \Sigma_i\ [\exp(-D_i q^2/\tau)]$, where $D_i$ is the diffusion or velocity of component i, $q = 4\pi n \sin(\theta/2)/\lambda$, where λ is the scattering vector with the wavelength of the light, n is the refractive index of the semen serum, and θ the scattering angle , and τ is the lagtime. The analysis of the cross-correlation function is preferably done using a multi-exponential analysis. A fit of a multi-exponential function to the measured cross-correlation

function g($\tau$) enables the velocity distribution of the spermatozoa in the semen sample to be analysed.

## Claims

1. Apparatus for measuring the concentration and motility of light scattering particles in a sample comprising means for producing two intersecting coherent light beams, means for locating a container for the sample at the point where the beams intersect, first and second photodetectors each arranged to receive radiation from a respective one of the beams after passing through the container and to produce an electrical signal representative of the radiation falling thereupon, a cross correlator receiving the signals from the photodetectors, and processing means for deriving from the cross correlation signal the different components of the velocity distribution of the scattering particles in the sample.

2. Apparatus as claimed in Claim 1 in whish the angle of intersection is between two and ninety degrees.

3. Apparatus as claimed in Claim 1 or Claim 2 in which the angle of intersection is five degrees.

4. Apparatus as claimed in any preceding claim in which the photodetectors are rotated out of the plain containing the light beams by an angle of between ten and one hundred and seventy degrees.

5. Apparatus as claimed in Claim 4 in which the angle is thirty degrees.

6. Apparatus as claimed in any preceding claim in which the two beams are produced using two lasers.

7. Apparatus as claimed in any of Claims1 to 5 in which the two beams are produced using a single laser and an optical beam splitter

8. Apparatus as claimed in Claim 7 or Claim 8 in which the laser(s) is/are laser diodes.

9. Apparatus as claimed in any preceding claim in which the light scattering particles are sperm in a semen sample.

10. A method of measuring the concentration and motility of light scattering particles in a sample comprising the steps of:

   passing two intersecting beams of coherent light through the sample such that the intersecting portion is located at the sample,

   detecting the intensity of each beam of light after it has passed through the sample and converting it to an electrical signal,

   cross correlating the electrical signals, and

   correcting the measured scattering intensities using the amplitude of the cross correlation function at the origin normalised by the cross correlation function at the origin for a single scattering function.

11. A method as claimed in Claim 10 carried out using apparatus as claimed in any of Claims 1 to 9.

12. A method as claimed in Claim 10 or 11 in which the light scattering particles are sperm in a semen sample.

Computer or microcontroller with terminal

15

14 Correlator

13 A/D converter

11

12

4 Detector 2

5 Detector 1

Transparent container with semen sample

6

1

7 Heater

8

Temperature controller

2

3

9 Laser 1

10 Laser 2

Fig. 1

Fig. 2

Fig. 3

Fig. 4

EP 1 464 966 A1

European Patent
Office

**EUROPEAN SEARCH REPORT**

Application Number

EP 04 25 1606

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 02/095368 A (ABERLE LISA ;KLEEMEIER MALTE (DE); FRAUNHOFER GES FORSCHUNG (DE)) 28 November 2002 (2002-11-28) * page 1; figures 1-5 * --- | 1-12 | G01P3/36 G01N21/51 G01N15/02 G01N21/47 |
| A | US 6 100 976 A (ACKERSON BRUCE J) 8 August 2000 (2000-08-08) * column 2, line 46 - column 4, line 21 * * column 12, line 30 - line 36 * --- | 1-12 | |
| A | US 4 601 578 A (WOOLFORD MURRAY W  ET AL) 22 July 1986 (1986-07-22) * column 5, line 61 - column 6, line 58; figures 4,5 * --- | 1-12 | |
| A | US 5 155 549 A (DHADWAL HARBANS S) 13 October 1992 (1992-10-13) * paragraph [0002] * --- | 1-12 | |
| A | US 4 311 383 A (OHTSUBO JUNJI) 19 January 1982 (1982-01-19) * column 3, line 58 - column 5, line 20; figures 1-3 * --- | 1-12 | TECHNICAL FIELDS SEARCHED (Int.Cl.7) G01P G01N |
| A | GB 2 130 718 A (MALVERN INSTR LTD) 6 June 1984 (1984-06-06) * the whole document * ----- | 1-12 | |

The present search report has been drawn up for all claims

| Place of search | Date of completion of the search | Examiner |
|---|---|---|
| MUNICH | 27 July 2004 | Consalvo, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 04 25 1606

This annex lists the patent family members relating to the patent documents cited in the above-mentioned European search report.
The members are as contained in the European Patent Office EDP file on
The European Patent Office is in no way liable for these particulars which are merely given for the purpose of information.

27-07-2004

| Patent document cited in search report | | Publication date | Patent family member(s) | | Publication date |
|---|---|---|---|---|---|
| WO 02095368 | A | 28-11-2002 | WO | 02095368 A1 | 28-11-2002 |
| | | | DE | 10223033 A1 | 30-01-2003 |
| | | | DE | 10292244 D2 | 27-05-2004 |
| US 6100976 | A | 08-08-2000 | NONE | | |
| US 4601578 | A | 22-07-1986 | NZ | 200732 A | 29-05-1987 |
| | | | AT | 30271 T | 15-10-1987 |
| | | | AU | 567495 B2 | 26-11-1987 |
| | | | AU | 1497783 A | 01-12-1983 |
| | | | CA | 1201301 A1 | 04-03-1986 |
| | | | DE | 3374083 D1 | 19-11-1987 |
| | | | EP | 0095386 A1 | 30-11-1983 |
| | | | JP | 59046937 A | 16-03-1984 |
| US 5155549 | A | 13-10-1992 | NONE | | |
| US 4311383 | A | 19-01-1982 | JP | 1247206 C | 16-01-1985 |
| | | | JP | 55051360 A | 15-04-1980 |
| | | | JP | 59023390 B | 01-06-1984 |
| GB 2130718 | A | 06-06-1984 | NONE | | |

EPO FORM P0459